# EUROPEAN PATENT APPLICATION

(11) **EP 3 561 977 A1**
(43) Date of publication of application: **30.10.2019**
(21) Application number: 18168913.4
(22) Date of filing: 24.04.2018
(51) Int. Cl.: H02G 3/22

(54) **A LEAD-IN ELEMENT**

(71) Applicant: ABB Schweiz AG, 5400 Baden (CH)
(72) Inventor: Seväkivi, Pertti, 00380 Helsinki (FI); Rapinoja, Hanna, 00380 Helsinki (FI)
(74) Representative: Kolster Oy Ab

(57) **Abstract**

The lead-in element (100) comprises a frame (110) having a hexagonal outer perimeter and being provided with an opening passing through the frame, and sealing means (130) surrounding a cable or pipe (10) passing through the opening in the frame of the lead-in element.

## Description

### FIELD

The invention relates to a lead-in element.

### BACKGROUND

Lead-in elements provide a passage for cables or pipes through walls in a building or in a device cabinet. The lead-in element has an opening for the cable or pipe and a sealing in order to seal the cable or the pipe in the opening. The sealing of the cable and/or pipe in the wall may constitute an IP-protection (Ingress protection) and/or an EMC-protection (Electromagnetic compatibility protection) in the wall.

### SUMMARY

The invention relates to an improved lead-in element.

The lead-in element according to the invention is defined in claim 1.

The lead-in element comprises
a frame having a hexagonal outer perimeter and being provided with an opening passing through the frame,
sealing means surrounding a cable or pipe passing through the opening in the frame of the lead-in element.

The hexagonal outer perimeter of the lead-in element makes it possible to use the space on a plate on which the lead-in elements are to be mounted efficiently.

The lead-in elements may be arranged adjacent to each other in a honey-comb structure on the plate. The space required on the plate for a certain number of lead-in elements may be minimized due to the hexagonal shape of the lead-in elements. Adjacent lead-in elements may be staggered in relation to each other on the plate.

The sealing means acts as a sealing between the cable or pipe and the frame of the lead-in element, but also as a strain relief for the cable. A separate strain relief for the cable is thus not needed.

The lead-in element may provide IP-protection and EMC-protection. The lead-in element may further provide a firestop in the wall provided that both sides of the wall are provided with a fire resistant sealing.

The lead-in element can easily be adapted to provide a 360 degree of EMC-protection e.g. by using electrically conductive sealing means.

The lead-in element may easily provide a sealing class of at least IP-54 between the cable and the lead-in element.

The IP sealing may also be realized with a separate bellow.

A single lead-in element may be used for a rather large range of cable diameters. This may be done by changing the sealing means in the lead-in element.

The lead-in element is as such robust and easy to attach to a plate. The plate with the lead-in elements may be attached to a wall in an enclosure for an electrical device. The plate could on the other hand form a wall in the enclosure or a portion of a wall in the enclosure.

Fastening screws may only be needed when attaching the plate to the enclosure, which means that the number of fastening screws may be minimized.

The installation of the plate with the lead-in elements to the enclosure is easy and the installation of the cables in the lead-in elements is easy.

The lead-in element may be used in connection with all kinds of cables and/or pipes and/or in connection with any longitudinal objects passing through a wall. The cross section of the longitudinal object may advantageously be round. It is easier to manufacture the lead-in for a cable or pipe with a round cross-section. Also other forms of cross sections of the longitudinal object may, however, be possible.

The expression wall has a broad meaning in this application including all wall like constructions limiting a first space on a first side of the wall from a second space on a second opposite side of the wall. The wall could be vertical, horizontal or inclined. The wall may function e.g. as a side wall, a ceiling or a floor in a building or in a device cabinet.

### DRAWINGS

The invention will be described with reference to the accompanying drawings in which
Figure 1 shows an axonometric view of a plate with lead-in elements,
Figure 2 shows an upper view of a plate with lead-in elements,
Figure 3 shows a cross-sectional view of a lead-in element,
Figure 4 shows a first embodiment of a lead-in element,
Figure 5 shows a second embodiment of a lead-in element,
Figure 6 shows a third embodiment of a lead-in element.

### DETAILED DESCRIPTION

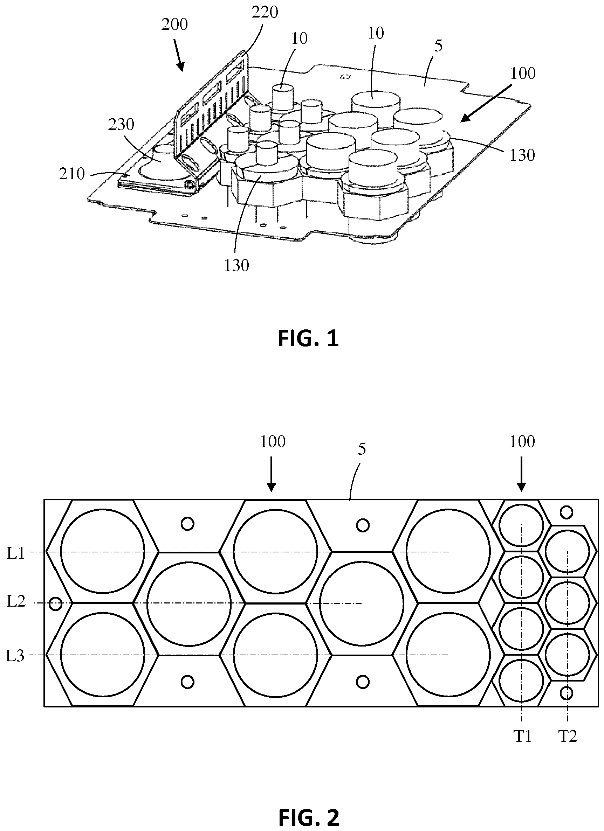

Figure 1 shows an axonometric view of a plate with lead-in elements.

The plate 5 may form a wall or a part of a wall in an enclosure of an electric device. The electric device may be e.g. a frequency converter.

The figure shows a prior art lead-in arrangement 200 comprising a bottom plate 210 attached to the plate 5 and a support plate 220 extending upwards from the bottom plate 210. Lead-ins 230 are arranged on the bottom plate 210. There is an opening in the plate 5 under the bottom plate 210 in order to allow cables to pass through the lead-ins 230 and further through the plate 5.

The figure shows further a lead-in arrangement according to the invention comprising lead-in elements 100 attached to an outer surface of the plate 5. The lead-in elements 100 may be positioned adjacent to each other on the plate 5. The embodiment in the figure comprises six lead-in elements 100 dimensioned for cables 10 with a bigger diameter and six lead-in elements 100 dimensioned for cables 10 with a smaller diameter. There could be any number of lead-in elements 100 on the plate 5. The lead-in elements 100 could be arranged in any pattern on the plate 5. There could be lead-in elements 100 of different sizes on the plate 5 or lead-in elements 100 of only one single size on the plate 5. A lead-in element 100 of a specific size may be used for cables 10 having an outer diameter within a specific diameter range by changing the sealing means 130 in the lead-in element 100. The outer diameter of the sealing means 130 may be adapted to the opening 120 in the lead-in element 100 and the inner diameter of the sealing means 130 may be adapted to the outer diameter of the cable 10. A lead-in element 100 of a certain size could be provided with a set of sealing means 130. The set of sealing means 130 could include sealing means 130 for each of the different cable outer diameters that fall within the specific cable outer diameter range of this lead-in element 100.

Figure 2 shows an upper view of a plate with lead-in elements.

Each lead-in element 100 may have a hexagonal outer perimeter. The outer perimeter of the lead-in element 100 may be formed of a regular hexagon. The hexagonal shape of the lead-in element 100 makes it possible to utilize the area of the plate 5 very efficiently. The lead-in elements 100 may be arranged adjacent to each other in a honey-comb structure on the plate 5. The space required on the plate 5 for a certain number of lead-in elements 100 may be minimized due to the hexagonal shape of the lead-in elements 100.

The figure shows an array of lead-in elements 100 comprising ten lead-in elements 100 of a bigger size and seven lead-in elements 100 of a smaller size. Each lead in element 100 may be designed for cables having an outer diameter in a certain diameter range. The adaption to different cable outer diameters is made with the sealing means 130. The bigger sized lead-in elements 100 are arranged in three different longitudinal lines L1, L2, L3. The center points of the lead-in elements 100 are on the respective lines L1, L2, L3. The lead-in elements 100 in the second longitudinal line L2 are staggered in relation to the lead-in elements 100 in the first and the third longitudinal line L1, L3. The smaller lead-in elements 100 are arranged in two different transverse lines T1, T2. The center points of the lead-in elements 100 are on the respective transverse line L1, L2. The lead-in elements 100 in the respective transverse lines T1, T2 are staggered in relation to each other.

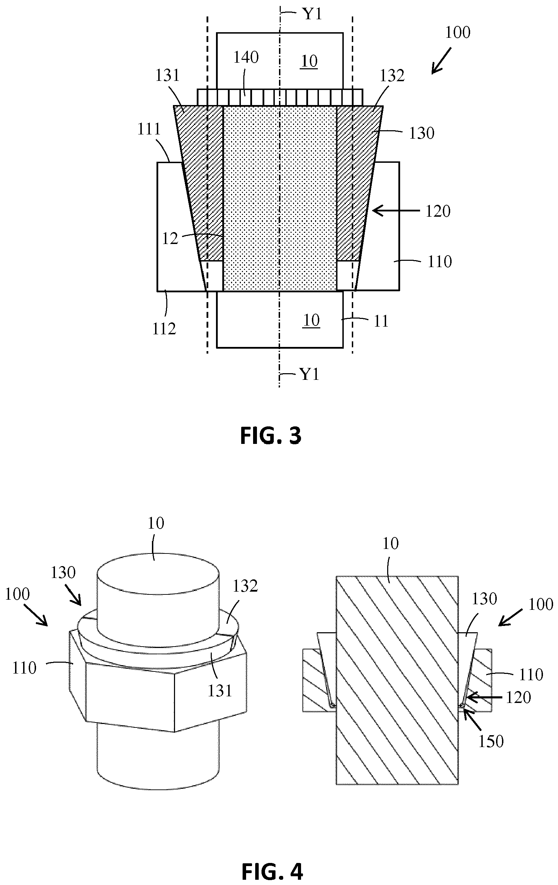

Figure 3 shows a cross-sectional view of a lead-in element.

The lead-in element 100 comprises a frame 110 having a hexagonal form as shown in figure 2. The frame 110 is provided with an opening 120 passing through the frame 110. The opening 120 is conical so that the diameter of the opening 120 contracts from the outer surface 111 of the frame 110 towards the inner surface 112 of the frame 110. The lead in element 100 comprises further sealing means 130. The sealing means 130 are positioned in the opening 120 around the cable 10 passing through the lead-in element 100. The sealing means 130 may be formed of at least two seals 131, 132 surrounding the cable 10. Each seal 131, 132 may have the form of a truncated sector. The sealing means 130 may have a wedge shape being adapted to the conical shape of the opening 120. The cable 10 passes through the opening 120 in the lead-in element 100 and is sealed with the sealing means 130 in the opening 120 in the lead-in element 100. The outer cover 11 of the cable 10 is taken off in the connection to the lead-in element 100 in order to reveal the metal armoring 12 of the cable 10. The sealing means 130 may be of a flexible electrically conducting material. The sealing means 130 may thus constitute an IP-protection and an EMC-protection in the lead-in element 100. The sealing means 130 may further be connected via a connector means 140 to the grounding of the apparatus in which the lead-in element 100 is used. The electromagnetic energy from the armoring 12 of the cable 10 may thus be diverted to ground via the electrically conducting sealing means 130 and the connector means 140. The inner surface 112 of the lead-in element 100 may be attached to the plate 5, which is not shown in the figure.

Figure 4 shows a first embodiment of a lead-in element.

Each lead-in element 100 may be designed for cables 10 having an outer diameter within a certain diameter range. This first embodiment shows a rather big sized lead-in element 100. The outer diameter of the cable 10 is in the upper end of the diameter range for this size of lead-in element 100. The outer perimeter of the frame 110 of the lead-in element 100 is only slightly bigger than the outer diameter of the cable 10. The thickness of the sealing means 130 in the radial direction is rather modest. The sealing means 130 may be formed of two seals 131, 132. A horizontal cross-section of each seal 131, 132 may have the form of a truncated sector. An O-ring 150 may be used at a bottom in the opening 120 in the frame 110 lead-in element 100. The O-ring 150 is an optional element in the invention that may be needed in a situation in which the sealing means 130 is made of a hard material.

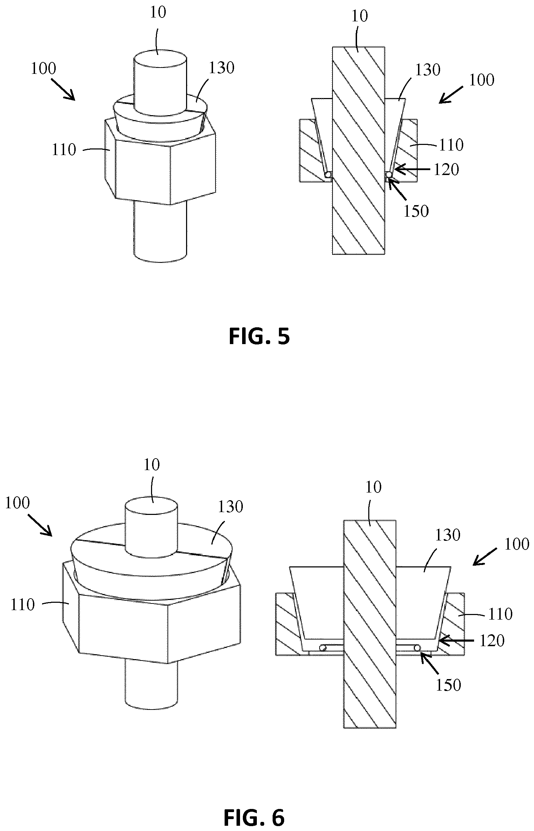

Figure 5 shows a second embodiment of a lead-in element.

This second embodiment shows a rather small sized lead-in element 100. The outer diameter of the cable 10 is in the upper end of the diameter range for this size of lead-in element 100. The thickness of the sealing means 130 in the radial direction is rather modest. The sealing means 130 corresponds as such to the sealing means 130 in the first embodiment.

Figure 6 shows a third embodiment of a lead-in element.

This second embodiment shows a rather big sized lead-in element 100. The outer diameter of the cable 10 is in the lower end of the diameter range for this size of lead-in element 100. The thickness of the sealing means 130 in the radial direction is rather big. The sealing means 130 corresponds as such to the sealing means 130 in the first embodiment.

A single lead-in element 100 size may be provided with a set of sealing means 130. Each sealing means 130 in the set of sealing means 130 may be adapted to a specific cable or pipe outer diameter. The sealing means 130 may be formed of any number e.g. of two or three separate seals 131, 132 having the form of a truncated sector. The sealing means 130 may be at least to some extent flexible and/or electrically conductive.

The sealing means 130 may on the other hand be formed of a flexible sheet like electrically conductive tape having a conical form. A suitable length of the tape is cut and wound around the cable in the conical opening 120 in the lead-in element 100. The tape is then rammed tightly around the cable or pipe 10 in the opening 120.

The sealing means 130 may be made e.g. from silumin in a casting process.

The lead-in element 100 may be made e.g. from silumin in a casting process.

The lead-in element 100 may on the other hand be made from plastic in a casting process. Several lead-ins 100 may be casted to form one entity. This entity may then be used to support the cables and/or pipes passing through the entity.

The lead-in elements 100 and/or the sealing means 130 may comprise a flexible electrically conducting sealing material.

The sealing in the lead-in element 100 may also be realized with a separate form sealing.

The invention and its embodiments are not limited to the examples shown in the figures, but the invention may vary within the scope of the protection defined by the claims.

## Claims

1. A lead-in element comprising
a frame (110) having a hexagonal outer perimeter and being provided with an opening (120) passing through the frame (110),
a sealing (130) surrounding a cable or pipe (10) passing through the opening (120) in the frame (110) of the lead-in element (100).

2. The lead-in element according to claim 1, wherein the sealing (130) is formed of at least two consecutive seals (131, 132) surrounding the cable (10).

3. The lead-in element according to claim 2, wherein a horizontal cross-section of each seal (131, 132) has the form of a truncated sector.

4. The lead-in element according to any one of claims 1 to 3, wherein a perimeter of the opening (120) in the lead-in element (100) has a conical shape.

5. The lead-in element according to claim 4, wherein the sealing (130) is wedge shaped so that the wedge shape has been adapted to the conical shape of the opening (120) in the lead-in element (100).

6. An enclosure of an electric device, wherein at least one wall of the enclosure comprises at least one lead-in element (100) according to any one of claims 1 to 5.
